# EUROPEAN PATENT APPLICATION

(11) **EP 4 472 040 A1**
(43) Date of publication of application: **04.12.2024**
(21) Application number: 23175977.0
(22) Date of filing: 30.05.2023
(51) Int. Cl.: H02K 7/18, H02K 11/25, B60L 3/00

(54) **ELECTRIC SCOOTER MOTOR**

(71) Applicant: SoFlow R&D GmbH, 9230 Flawil (CH)
(72) Inventor: Hug, Manuel, 5430 Wettingen (CH); Neuckel, Martin, 4142 Münchenstein (CH); Giang, Zi Fong, 9500 Wil (CH)
(74) Representative: Glück Kritzenberger Patentanwälte PartGmbB

(57) **Abstract**

The present invention relates to an electric scooter motor (40) comprising a stator (50) and a rotor (62), the stator (50) of the scooter motor comprising a stator winding (54). The scooter motor (40) comprises at least one temperature sensor (60) configured to output a temperature signal to a motor controller of an electric scooter (10). According to the invention the at least one temperature sensor (60) is located in connection with the stator winding (54) which allows an effective protection of the scooter motor (40).

## Description

The present invention relates to an electric scooter motor. With the development of modern society and the acceleration of people's pace of life, electric scooters are becoming increasingly popular as a solution for people's last mile of travel. The electric motor used in electric scooters requires small size, light weight, and high torque, so it is easy to accumulate temperature and cause damage to the motor under the working conditions of long-distance climbing with large loads, posing a safety hazard during travel.

The existing electric scooter motors according to the present invention comprise a stator and a rotor, whereby the stator of the scooter motor comprises stator winding, and the scooter motor comprises at least one temperature sensor configured to output a temperature signal to a motor controller of an electric scooter.

In prior art this temperature sensor is usually an NTC thermistor located at the motor body and any motor overheat protection function of an electric scooter is generally achieved by sampling and calculating the motor controller ADC circuit. Anyway, this well-known temperature protection is troublesome as the temperature drift is large, and the consistency of mass production is difficult to control, resulting in high control costs. At the same time, the protection function is prone to failure, causing a large number of after-sales complaints and costs.

It is object of the present invention to overcome the above mentioned drawbacks of the prior art, and to provide an electric scooter motor with a reliable and fast-reacting temperature protection.

The object is solved with an electric scooter motor according to claim 1 and with an electric scooter according to claim 10. Advantageous embodiments of the invention are subject matter of the corresponding dependent claims. Preferred embodiments of the invention are described in the specification and in the drawings, too.

To address the shortcomings of existing technology the present invention provides at least one temperature sensor being located in connection with the stator winding, e.g. in contact with their surface and/or in a gap between the stator winding, in any case in close vicinity to the stator winding, so that the winding temperature or its changes can be reliably and quickly be sensed by the temperature sensor.

This temperature sensor can be used solely or additionally to the above mentioned NTC temperature sensor. When the temperature sensor indicated a pre-selected temperature value, the temperature sensor or a protection circuit of an overheating device acts, and an over-temperature control signal is transmitted to the motor controller to indicate an over-temperature condition or limit the output power of the scooter motor to a limit value or finally to stop the motor from working or, so that the scooter motor is able to cool down without being damaged.

The term "in connection with" of claim 1 specifies either a direct physical contact or a contact via a heat-conducting element or material, e.g. a heat-conducting paste, or its location in immediate vicinity of the motor winding, so that the heat of the motor winding can immediately affect the temperature sensor, as to enable it to sense the temperature in real-time. Such an immediate vicinity would probably extend within the range of few millimetres.

According to a preferred embodiment of the invention the scooter motor is a brushless DC motor, which proved very reliable as drive motor of an electric scooter.

Preferably, the at least one temperature sensor is bonded to the stator winding via a thermal conductive material, particularly silicone grease. This conductive material has a thermal conductivity coefficient ≥ 3 and is thus adapted to provide a very good temperature conduction between the stator winding and the temperature sensor.

According to a preferred embodiment of the invention the at least one temperature sensor is a mechanical temperature sensor. A mechanical temperature sensor has the advantage, that it is not affected by software/hardware circuits, thus making temperature detection more stable and reliable. Particularly, mechanical temperature sensors do not have any temperature drift characteristics, which is obligatory for semiconductors so that long-term use of the mechanical temperature sensor will not cause any drift in the temperature detection and thus possibly also in the setting of a temperature limit. Further, mechanical temperature sensors are easy to control for consistency during mass production and resulting in significant temperature fluctuations during mass production and finally mechanical temperature sensor signals are not as susceptible to interference as ADC circuits prompt to temperature limiting failures.

Preferably, the mechanical temperature sensor is a bimetallic contact type mechanical switch. This kind of mechanical temperature sensor is well adapted for the temperature conditions of an electric scooter motor. It is very reliable and has a long life-time without showing any temperature drift. When the bimetallic temperature sensor detects overheating of the stator winding, it sends an open circuit signal (normally closed) or a short circuit signal (normally open) to the motor controller.

In an advantageous embodiment of the invention the mechanical temperature sensor is configured to open at an upper limit temperature and close again after a lower limit temperature.

The preferred upper limit temperature for the temperature sensor may e.g. be 140 °C, and the lower limit temperature which is an over-temperature relief value, at which the bimetallic sensor switch closes again, might be 100 °C. Thus, the temperature sensor enables operation of the motor after the scooter motor has cooled down to a normal operation temperature.

In a preferred embodiment of the invention the at least one temperature sensor is installed in a gap between the stator winding, in which location the temperature conditions quite exactly mirror the temperature of the stator winding. This arrangement of the temperature sensor does not necessarily requires a direct physical contact with the winding.

Additionally and/or alternatively the temperature sensor may be located in contact with the surface of the stator winding which ensures excellent thermal transition between the winding and the temperature sensor. This contact can either be a direct physical contact with the winding surface or a contact via a thermal conductor, e.g. a thermal conductivity paste etc..

Advantageously, the scooter motor has a temperature protection circuit provided on a printed circuit board (PCBA) located in connection with the scooter motor. Via this measure, the temperature protection circuit is separated from other electronics and circuits of an electric scooter, so that the reliability of a temperature protection, based on this arrangement is very reliable. This, integration of the temperature protection circuit with the motor also has the advantage that the circuit is optimally configured for the motor. Thus, no erroneous link of a protection circuit and a scooter motor may happen, which may happen, if such an integration is not present, as it happens with external components. The output signal of the temperature protection circuit may further directly be used, e.g. to switch off the scooter motor, aside of any other scooter electronics. Accordingly, this is a very reliable and failure-free and interference-free protection of the scooter motor.

Preferably, the at least one temperature sensor is installed via said printed circuit board to the stator winding to keep it from losing contact with the surface of the stator winding. Thus, this PCBA has the double function of integrating the temperature protection circuit with the motor and for keeping the temperature sensor in place.

According to a preferred embodiment of the invention the at least one temperature sensor is configured to output a temperature signal indicating at least two different temperatures of the stator winding. This detection of two different limit temperatures can be realised with one or two mechanical sensors. The provision of two different limit temperatures allows a stepwise reduction of the motor load. For example can a first limit temperature be used to indicate an overheat-situation or to limit the motor power and a second higher temperature may than be used to limit the motor power or to switch the motor off. This stepwise temperature supervision has the advantage that the scooter used is informed about the overheat-situation before the motor power is reduced or the motor is even switched off. The output power of the motor can e.g. be limited by limiting the feed current to the motor to ≤ 8A.

The invention also relates to an electric scooter comprising a scooter motor according to the above described embodiments and a motor controller for the scooter motor and wherein the rotor of the scooter motor being connected to a gear connected to a drive axis of a scooter wheel, wherein the motor controller is connected to the at least one temperature sensor of the scooter motor, which motor controller is configured to issue at least one safety action for the electric scooter in case of over-temperature of the scooter motor.

Advantageously, the safety action comprises at least one of the following actions:
- indicating an over-temperature situation of the scooter motor on a display of the scooter,
- indicating acoustically an over-temperature situation of the scooter motor,
- limiting the power of the scooter motor, and
- switching off the scooter motor.

The safety actions might thus be in a range from simple warnings to cutting of the electric motor, e.g. by cutting the power supply thereto.

In a preferred embodiment of the invention the at least one temperature sensor is configured to output a signal indicating at least two different temperatures to the motor controller, whereby at a first temperature the motor controller is configured to indicate an over-temperature situation of the scooter motor on a display of the scooter and/or acoustically and whereby at a second temperature the motor controller is configured to limit the motor power of the scooter motor and/or to switch off the scooter motor.

Correspondingly, the at least one temperature sensor is in this case configured to output a temperature signal comprising at least three different sensed temperatures to the temperature monitoring device, and in that at a third temperature the motor controller is configured to switch off the scooter motor.

This could be e.g. a bimetallic sensor with several contacts at different positions of the bimetal or several mechanical sensors, e.g. bimetallic sensors. Alternatively, an electric or electronic sensor might be used which is able to output several temperatures, e.g. an analogue or digital temperature sensor.

In its most simple embodiment the motor controller may be a switch to cut off the motor from its power supply.

Following terms are used as synonyms: scooter - electric scooter; motor - scooter motor;

The invention is now described by aid of the enclosed schematic drawing, in which
- Fig. 1: shows a perspective view of an electric scooter,
- Fig. 2: shows a view according to Fig. 1 with an explosion view of the the rear wheel with the scooter motor,
- Fig. 3: shows an enlargement of the explosion view of the rear wheel of Fig. 2,
- Fig. 4: shows a further enlargement of Fig. 3 only showing the iron stator core of the motor with the stator winding and a uppermost iron sheet of the iron stator core carrying a temperature sensor an a PCBA of the motor controller, and
- Fig. 5: shows a sectional view through a bimetallic temperature sensor for the use in the electric scooter of Fig. 1.

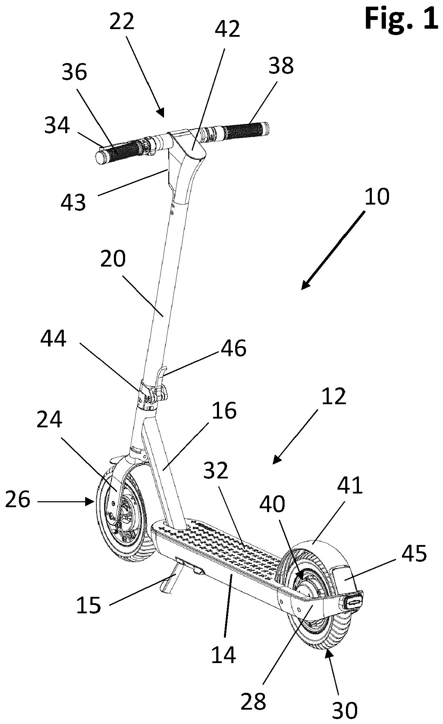

Fig. 1 shows an electric scooter 10 according to the present invention having a scoter body 12 with a horizontal main body 14 carrying at its front a support 16 tilted upwards and carrying a sleeve 18 for a stem 20 carrying at its upper end a handlebar 22 and at its lower end a front fork 24 for a front wheel 26 of the scooter 10. At its rear the main body 14 carries a rear fork 28 holding a rear wheel 30. On the top of the main body 14 a deck 32 is provided for a person to stand on and to operate the scooter. On the side of the main body 14 a kickstand 15 is provided for parking the scooter 10.

The front wheel 26 comprises a disc brake (not shown) which is connected to a brake lever 34. The handlebar 22 comprises two grips 36, 38, from which the right one 38 is a turnable accelerator grip for operating an elevator motor 40 located in the rear wheel 30, which is protected by a mudguard 41, carrying at its rear a rear light 45 and eventually a stop light. In the middle of the handlebar 22 a display 42 is provided to indicate the speed and eventually some other status information of the scooter, as e.g. battery charge level. At the upper end of the stem a head light 43 is located. Below the deck 32 the main body 14 carries a releasably mounted battery (not shown) as well as a scooter controller (not shown) for all scooter functions, the uppermost part of it being a motor controller.

For a better transportability the scooter comprises a folding mechanism 44 with a quick release lever 46 via which the stem 20 above the support 16 can be folded backwards to the main body 14.

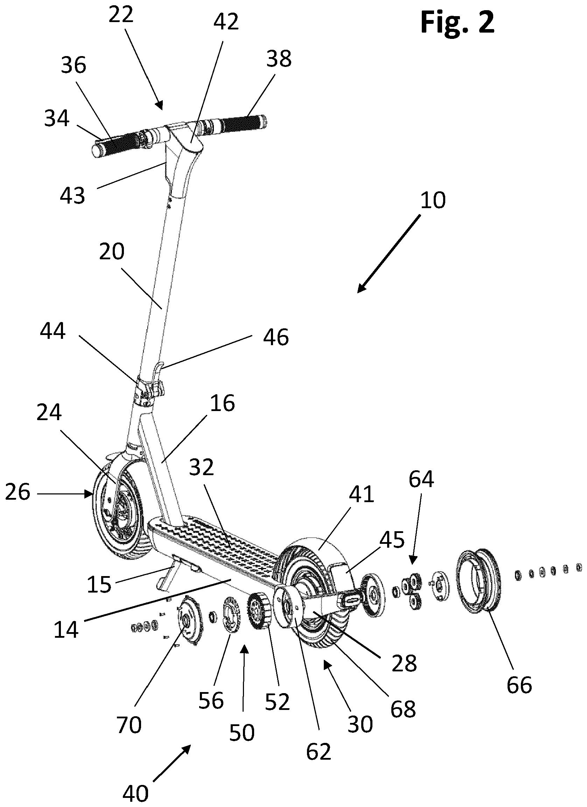

Essential components of the motor 40 are visible from the explosion view of Figs. 2 to 4.

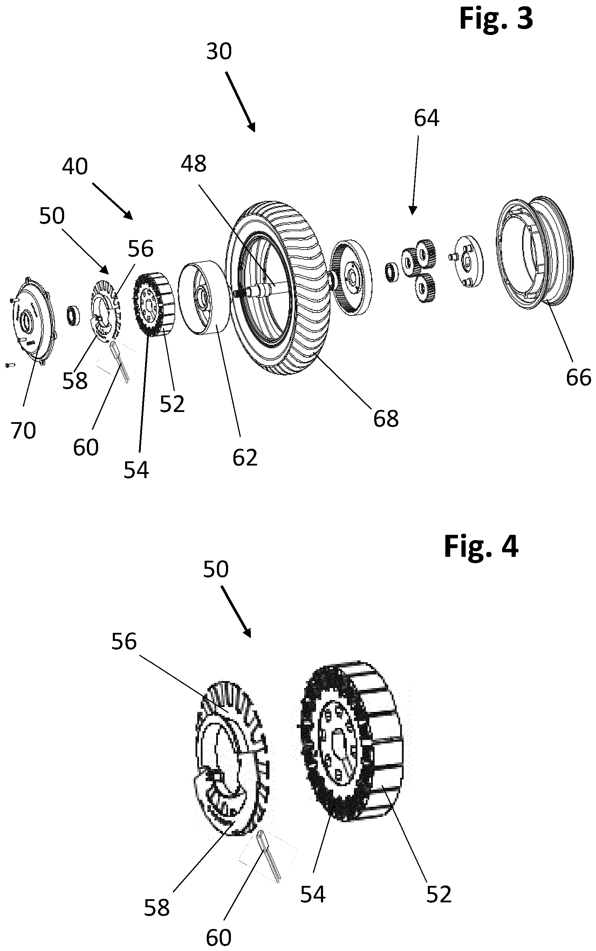

The rear wheel 28 is mounted on an axle 48 (Fig. 3) which is - fixed against rotation - mounted to the rear fork 28. The motor axle 48 carries a stator 50 with a stator iron core 52 carrying a stator winding 54.

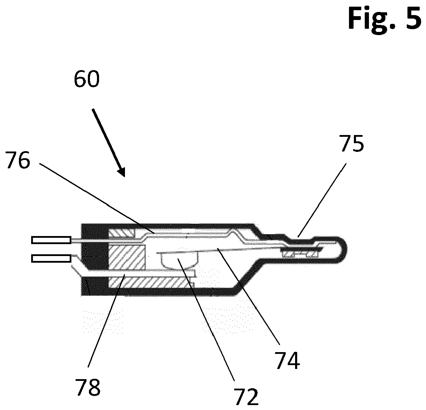

The outermost iron sheet 56 of the stator iron core 52 (see particularly Fig. 4) carries a printed circuit board 58 (PCBA) of the motor controller which is electrically connected a temperature sensor 60 (Fig. 5), which is preferably a mechanical temperature sensor, e.g. a bimetallic type temperature switch. The temperature sensor 60 is clamped via the PCBA 58 in contact with the stator winding 54. For the contact of the temperature sensor to the stator winding additionally a thermal conductive material, e.g. a thermal adhesive, might be used, which improves the transmission the heat generated by the stator iron core winding coil better and faster to the temperature sensor.

Around the stator winding a rotor 62 comprising permanent magnets is rotatably fixed to a planetary gear 64 which again is connected to a rim 66 carrying the tire 68 of the rear wheel.

On the left side the motor 40 is protected by a cover 70.

The used temperature sensor 60 shown in Fig. 5 is a simple mechanical temperature switch of the bimetallic type.

It comprises a movable contact element 72 which is carried by a temperature sensitive bimetallic strip 74. The movable contact element 72 is connected via the bimetallic strip 74 to a first switch contact 76. The bimetallic switch temperature sensor 60 comprises a second switch contact 78, which is contacted by the movable contact element below a limit temperature. Above that limit temperature the bimetallic strip bends upwards as to release the movable contact element 72 from the second switch contact 78. The bimetallic strip 74 is connected to the heat contact area 75 of the sensor 60 so that the temperature of the bimetallic strip reflects quite well the temperature of the heat contact area 75 which is in contact with the motor winding 54 by the pressure of the PCBA 58 and imprived by a heat conductive material (not shown).

As this temperature sensor is directly in contact with the stator winding 54 it is able to immediately and in real time sense the winding temperature and if the winding becomes too hot, i.e. reaches the limit temperature and the temperature sensor 60 opens. This overheating may happen when the motor is overloaded, e.g. when driving a slope upwards over a longer time.

The temperature sensor 60 is for example via the PCBA 58 connected to the motor controller of the scooter.

Thus, the temperature sensor 60 monitors the temperature generated by the stator core winding 54 in real-time. When the temperature reaches the predetermined limit, the temperature sensor 60 opens and transmits an over temperature control signal to the motor controller through the PCBA circuit board 58, causing the motor 40 to stop running or reduce power operation, so that the motor is able to cool down without being damaged.

After the motor has cooled down to a certain value the bimetallic type switch temperature sensor 60 closes and the motor 40 is able to start again. Accordingly, the temperature protection of the present invention for the scooter motor 40 is easy to operate and use.

The invention is not limited by the above description of a preferred embodiment but may be varied within the scope of the appended patent claims.

### List of reference numbers:

- 10: Electric scooter
- 12: scooter body
- 14: main body
- 15: kickstand
- 16: support
- 18: sleeve
- 20: stem
- 22: handlebar
- 24: front fork
- 26: front wheel
- 28: rear fork
- 30: rear wheel
- 32: deck
- 34: brake lever
- 36: left grip
- 38: right turnable accelerator grip
- 40: scooter motor (brushless DC motor)
- 41: mudguard
- 42: display
- 43: head light - front light
- 44: folding mechanism
- 45: rear light
- 46: quick release lever of the folding mechanism
- 48: rotationally fixed rear axle of rear wheel
- 50: stator of the motor (stator iron core with winding)
- 52: stator iron core
- 54: stator winding
- 56: outermost iron sheet of the stator iron core
- 58: printed circuit board
- 60: temperature sensor - bimetallic type temperature switch
- 62: rotor with permanent magnets
- 64: planetary gear between rotor and wheel rim
- 66: wheel rim
- 68: wheel tire
- 70: cover
- 72: movable contact element
- 74: bimetallic strip carrying and contacting the movable contact element
- 75: heat contact area of the temperature sensor
- 76: first switch contact
- 78: second switch contact

## Claims

1. Electric scooter motor (40) comprising a stator (50) and a rotor (62), the stator (50) of the scooter motor comprising a stator winding (54), the scooter motor (40) comprising at least one temperature sensor (60) configured to output a temperature signal to a motor controller of an electric scooter (10), **characterized in that** the at least one temperature sensor (60) is located in connection with the stator winding (54).

2. Scooter motor (40) according to claim 1, the scooter motor (40) being a brushless DC motor.

3. Scooter motor (40) according to claim 1 or 2, **characterized in that** the at least one temperature sensor (60) is bonded to the stator winding via a thermal conductive material, particularly silicone grease.

4. Scooter motor (40) according to one of the preceding claims, **characterized in that** the at least one temperature sensor (60) is a mechanical temperature sensor.

5. Scooter motor (40) according to claim 4, **characterized in in that** the mechanical temperature sensor (60) is a bimetallic contact type mechanical switch.

6. Scooter motor (40) according to claim 4 or 5, **characterized in in that** the mechanical temperature sensor (60) is configured to open at an upper limit temperature and close again after a lower limit temperature.

7. Scooter motor (40) according to one of the preceding claims, **characterized in that** the at least one temperature sensor (60) is installed in a gap between the stator winding.

8. Scooter motor (40) according to one of the preceding claims, **characterized in that** the at least one temperature sensor (60) is installed in contact with the surface of the stator winding (54).

9. Scooter motor (40) according to one of the preceding claims, **characterized in that** it has a temperature protection circuit provided on a printed circuit board (PCBA) (58) located in connection with the scooter stator (50).

10. Scooter motor (40) according to claim 9, **characterized in that** the at least one temperature sensor (60) is installed via said printed circuit board (58) to the stator winding (54) to keep it from losing contact with the surface of the stator winding (54).

11. Scooter motor (40) according to one of the preceding claims, **characterized in that** the at least one temperature sensor (60) is configured to output a temperature signal indicating at least two different temperatures of the stator winding (54).

12. Electric scooter comprising a scooter motor (40) according to one of the preceding claims and a motor controller for the scooter motor (40) and wherein the rotor of the scooter motor (40) being connected to a gear (64) connected to a scooter wheel (30), wherein the motor controller is connected to the at least one temperature sensor (60) of the scooter motor (40), which motor controller is configured to issue at least one safety action for the electric scooter (10) in case of over-temperature of the scooter motor (40) as indicated by the temperature sensor (60).

13. Electric scooter according to claim 12, **characterized in that** the safety action comprises at least one of the following actions:
- indicating an over-temperature situation of the scooter motor (40) on a display (42) of the scooter (10),
- indicating acoustically an over-temperature situation of the scooter motor (40),
- limiting the power of the scooter motor (40), and
- switching off the scooter motor (40).

14. Electric scooter (10) according to claim 12 or 13, wherein the at least one temperature sensor (60) is configured to output a signal indicating at least two different temperatures to the motor controller, whereby at a first temperature the motor controller is configured to indicate an over-temperature situation of the scooter motor (40) on a display of the scooter and/or acoustically and whereby at a second temperature the motor controller is configured to limit the motor power of the scooter motor (40) and/or to switch off the scooter motor (40).

15. Electric scooter according to claim 14, **characterized in that** the at least one temperature sensor (60) is configured to output a temperature signal comprising at least three different sensed temperatures to the temperature monitoring device, and **in that** at a third temperature the motor controller is configured to switch off the scooter motor (40).
